# FASCICULE DE BREVET EUROPEEN

(11) **EP 2 480 834 B1**
(45) Date de publication et mention de la délivrance du brevet: **22.07.2015**
(21) Numéro de dépôt: 10769010.9
(22) Date de dépôt: 21.09.2010
(51) Int. Cl.: F23R 3/06, F23R 3/10, F23R 3/50, F23R 3/26, F23R 3/04

(54) **CHAMBRE DE COMBUSTION DE TURBOMACHINE AERONAUTIQUE AVEC TROUS D'AIR DE COMBUSTION DE CONFIGURATIONS DIFFERENTES**
BRENNKAMMER EINES LUFTFAHRT-TURBINENMOTORS MIT VERBRENNUNGSLUFTLÖCHERN MIT UNTERSCHIEDLICHER KONFIGURATION
COMBUSTION CHAMBER OF AN AERONAUTICAL TURBINE ENGINE WITH COMBUSTION AIR HOLES HAVING DIFFERENT CONFIGURATIONS

(30) Priorité: 21.09.2009 FR 0956467
(43) Date de publication de la demande: 01.08.2012
(73) Titulaire: Snecma, 75015 Paris (FR)
(72) Inventeur: COMMARET, Patrice, 77000 Vaux Le Penil (FR); NOEL, Thomas, 91800 Brunoy (FR)
(74) Mandataire: Berbinau, Pierre Jean Marie
(86) Numéro de dépôt international: PCT/FR2010/051970
(87) Numéro de publication internationale: WO 2011/033242

(56) Documents cités:
- EP-A1- 1 092 925
- EP-A2- 2 053 312
- US-A- 5 297 385

## Description

La présente invention concerne le domaine des chambres de combustion de turbomachine aéronautique. L'invention concerne plus particulièrement une chambre de combustion annulaire d'axe longitudinal A, délimitée par une paroi latérale externe, une paroi latérale interne, et un fond de chambre annulaire reliant une extrémité de la paroi latérale externe et une extrémité de la paroi latérale interne, la paroi latérale externe comportant, répartis le long de sa circonférence, des bougies, des trous primaires, et des trous de dilution situés en aval des trous primaires selon la direction de l'axe longitudinal A.

Dans la description qui suit les termes "amont" et "aval" sont définis par rapport au sens de circulation normal de l'air dans la chambre de combustion. Les termes "intérieur" et "extérieur" indiquent la région à l'intérieur et à l'extérieur de la chambre de combustion, respectivement.

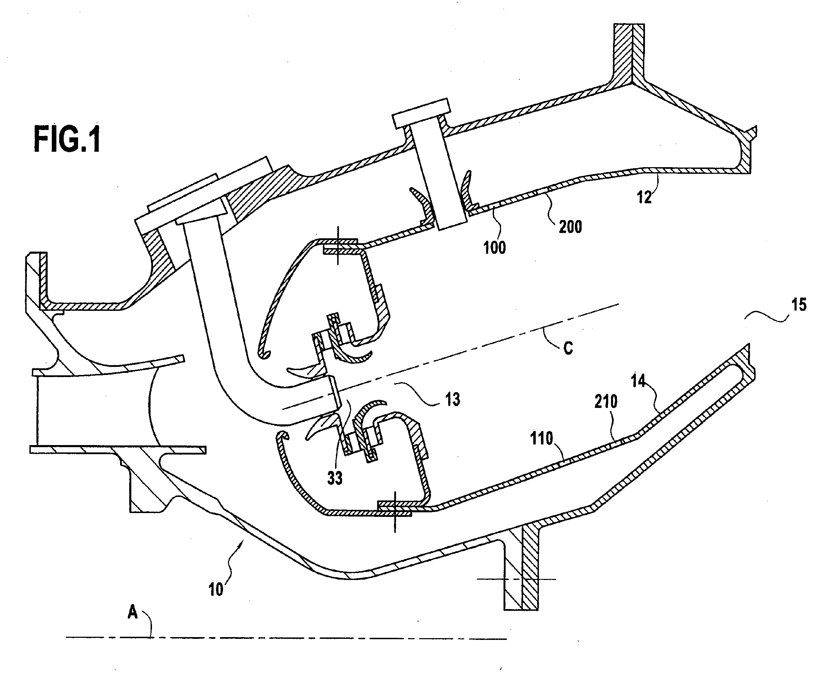

La figure 1 montre une coupe longitudinale d'un secteur d'une chambre de combustion 10 d'une turbomachine aéronautique. La chambre de combustion 10 est annulaire d'axe longitudinal A. Elle est délimitée par une paroi latérale externe 12 sensiblement cylindrique d'axe A, par une paroi latérale interne 14 sensiblement cylindrique d'axe A et de diamètre moyen inférieur au diamètre moyen de la paroi latérale externe 12, et par un fond de chambre 13 annulaire qui relie une extrémité de la paroi latérale externe 12 et l'extrémité en regard de la paroi latérale interne 14 de façon à fermer l'extrémité amont de la chambre de combustion 10. Ainsi, la surface moyenne traversant la chambre de combustion 10 depuis le fond de chambre 13 jusqu'à l'extrémité aval 15 est un cône dont l'axe est l'axe longitudinal A. L'intersection de ce cône avec un plan passant par l'axe longitudinal A est un axe C, comme représenté sur la figure 1.

Le fond de chambre 13 est muni de plusieurs systèmes d'injection 33 de carburant qui injectent le carburant dans la chambre de combustion 10. Les systèmes d'injection 33 sont répartis autour de l'axe longitudinal A.

L'air pénètre dans la chambre de combustion 10 par le fond de chambre 13, par des trous primaires 100, des trous de dilution 200, et des trous de refroidissement (non représentés), tous ces trous étant sur la paroi latérale externe 12, ainsi que par des trous primaires 110, des trous de dilution 210 et des trous de refroidissement (non représentés), tous ces trous étant sur la paroi latérale interne 14.

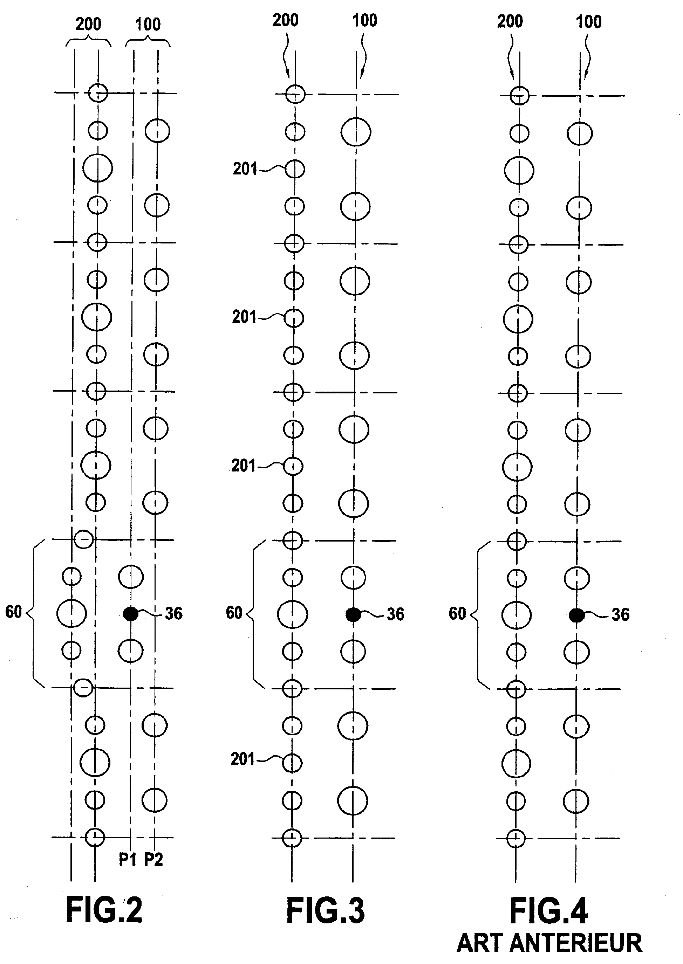

Des bougies 36 (visibles sur la figure 4) sont situées sensiblement au niveau des trous primaires 100 et sont réparties régulièrement sur la paroi latérale externe 12 autour de l'axe longitudinal A.

Dans le cas représenté sur la figure 1, la chambre de combustion 10 comporte deux bougies 36 (voir figure 4), qui sont donc diamétralement opposées par rapport à l'axe A.

Une telle chambre de combustion est destinée à fonctionner à diverses altitudes. Les normes actuelles imposent à une chambre de combustion d'être apte à fonctionner à des altitudes de plus en plus élevées. En particulier, une chambre de combustion doit, dans l'hypothèse où la combustion s'interrompt, être apte à être rallumée à une altitude la plus élevée possible, appelée plafond de rallumage.

Il est démontré par des essais de rallumage en altitude de chambre de combustion que pour augmenter le plafond de rallumage donc la capacité à rallumer la chambre de combustion à une altitude plus élevée, il faut :
- soit diminuer le pourcentage d'air (par rapport à la quantité d'air total passant dans la chambre de combustion) qui est introduit dans la chambre de combustion par les trous primaires,
- soit augmenter le volume V_{ZP} de la zone primaire pour une répartition d'air dans la chambre de combustion constante (c'est-à-dire répartition de l'air entre les différentes entrées d'air dans la chambre de combustion). La zone primaire est définie comme la région de la chambre de combustion s'étendant entre le fond de chambre et le plan passant par les trous primaires.

Ces 2 solutions ont pour inconvénients d'entrainer une augmentation des niveaux de fumées et de NOx émis par la chambre de combustion.

Dans les chambres de combustion actuelles, l'obtention d'un plafond de rallumage plus élevé risque donc de ne plus permettre de satisfaire aux normes de pollution, d'autant plus que ces normes tendent à devenir de plus en plus sévères.

Le document EP 1092925 A1 montre une chambre de combustion selon le préambule de la revendication 1.

L'invention vise à proposer une chambre de combustion qui puisse être rallumée à une altitude plus élevée (plafond de rallumage élevé), tout en satisfaisant aux normes de pollution en vigueur.

Ce but est atteint grâce au fait que les trous primaires situés dans chacune des zones adjacentes à une des bougies présentent une configuration différente des trous primaires situés en dehors de ces zones de telle sorte que l'apport d'air dans les zones adjacentes est différent de l'apport d'air en dehors de ces zones.

Grâce à ces dispositions, on conserve un plafond de rallumage élevé, voir on augmente ce plafond, et simultanément on maitrise la production de fumées et de NOx, ce qui permet de satisfaire aux normes de pollution.

Selon un premier mode de réalisation de l'invention, les trous primaires situés dans chacune des zones adjacentes à une des bougies sont situés plus en aval que les trous primaires situés en dehors de ces zones.

Selon un second mode de réalisation de l'invention, le rapport R₁ du débit d'air passant par les trous primaires au débit d'air passant par les trous de dilution dans une des zones adjacentes à une des bougies est inférieur au rapport R₂ du débit d'air passant par les trous primaires au débit d'air passant par les trous de dilution en dehors desdites zones.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 est une section longitudinale d'un secteur d'une chambre de combustion,
- la figure 2 est une vue en perspective d'une partie de la paroi latérale externe d'une chambre de combustion selon l'invention,
- la figure 3 est une vue en perspective d'une partie de la paroi latérale externe d'une chambre de combustion selon un exemple demonstratif,
- la figure 4 est une vue en perspective d'une partie de la paroi latérale externe d'une chambre de combustion selon l'art antérieur.

La figure 4 montre une vue en perspective d'une partie de la paroi latérale externe 12 d'une chambre de combustion 10 selon l'art antérieur telle que décrite ci-dessus. On y distingue des trous primaires 100 et des trous de dilution 200, ainsi qu'une des deux bougies 36.

Pour chacune des bougies 36, on définit une zone adjacente 60, qui est une zone regroupant les trous primaires 100 et les trous secondaires 200 les plus proches de cette bougie 36. La bougie 36 se situe donc sensiblement au milieu de la zone adjacente 60. Dans le cas représenté sur les figures 2 et 3, la zone adjacente 60 comprend deux trous primaires 100, et quatre trous de dilution 200 (trois trous de dilution plus, sur chacune des deux bordures de la zone adjacente, la moitié d'un trou de dilution à cheval sur cette bordure). Les trous situés plus loin de cette bougie 36 sont situés en dehors de cette zone adjacente 60. La situation est analogue pour l'autre bougie 36.

Alternativement, la zone adjacente 60 autour d'une bougie 36 peut ne comprendre que deux trous primaires 100 (un trou de chaque côté de la bougie 36) et deux trous de dilution 200 (un trou de chaque côté de la bougie 36).

Les trous primaires 100 sont situés le long d'une circonférence centrée sur l'axe longitudinal A, dans un plan perpendiculaire à cet axe. Les trous de dilution 200 sont situés le long d'une autre circonférence dans un plan parallèle au plan contenant la circonférence des trous primaires 100, en aval des trous primaires 100 selon la direction de l'axe longitudinal A.

De façon surprenante, les inventeurs ont constaté qu'en modifiant des caractéristiques des trous primaires 100 de façon à différencier les trous primaires 100 qui se trouvent dans les zones adjacentes 60 par rapport aux trous primaires 100 qui se trouvent en dehors des zones adjacentes 60, il était possible de conserver ou d'augmenter le plafond de rallumage, tout en satisfaisant aux normes de pollution en vigueur.

Ainsi, les inventeurs ont modifié la configuration des trous primaires 100 de façon à différencier les trous primaires 100 qui se trouvent dans les zones adjacentes 60 par rapport aux trous primaires 100 qui se trouvent en dehors des zones adjacentes 60. Par "configuration des trous primaires" on entend par exemple la position des trous primaires 100, et/ou la forme et/ou la taille des trous primaires 100.

En différenciant la configuration des trous primaires 100 qui se trouvent dans les zones adjacentes 60 par rapport à la configuration des trous primaires 100 qui se trouvent en dehors des zones adjacentes 60, on différencie l'apport d'air dans les zones adjacentes 60 par rapport à l'apport d'air en dehors des zones adjacentes 60.

Selon l'invention, les trous primaires 100 qui se trouvent dans les zones adjacentes 60 sont situés plus en aval que les trous primaires 100 qui se trouvent en dehors des zones adjacentes 60. Cette situation est illustrée en figure 2. Les trous primaires 100 qui se trouvent dans les zones adjacentes 60 se situent sur une circonférence centrée sur l'axe longitudinal A, dans un premier plan P1 perpendiculaire à cet axe. Les trous primaires 100 qui se trouvent en dehors des zones adjacentes 60 se situent sur une circonférence dans un second plan P2 parallèle à ce premier plan et situé en amont du premier plan P1.

Par exemple, comme représenté sur la figure 2, la distance entre ce premier plan P1 et ce second plan P2 est égale au diamètre d'un trou primaire 100 (les plans P1 et P2 sont parallèles, et par conséquent la distance entre ces deux plans est définie classiquement comme la longueur d'un segment s'étendant d'un de ces plans à l'autre perpendiculairement à ces plans). La distance entre ce premier plan P1 et ce second plan P2 peut également être supérieure à la plus grande dimension d'un trou primaire 100.

Alternativement, la distance entre ce premier plan P1 et ce second plan P2 peut également être inférieure à la plus grande dimension d'un trou primaire 100.

Le volume de la zone primaire en amont des trous primaires 100 situés dans la zone adjacente 60 est donc augmenté. Ceci permet d'augmenter le plafond de rallumage tout en conservant les niveaux de fumées et de NOx émis par la chambre de combustion. A l'inverse, il est possible de conserver la valeur du volume de la zone primaire dans la zone adjacente 60, c'est à dire de conserver la position des trous primaires 100 au voisinage des bougies 36 (plan P1) comme dans l'art antérieur sur la figure 4, tout en déplaçant vers l'amont les trous primaires 100 situés en dehors des zones adjacentes 60 plan P2. Ceci entraîne une diminution des niveaux de fumées et de NOx émis par la chambre de combustion tout en conservant la plafond de rallumage. Ainsi, les essais réalisés par les inventeurs montrent que lorsque le volume de la zone primaire en dehors des zones adjacentes 60 passe de 2,77 litres à 2,2 litres, on obtient une diminution du niveau de fumées de 3 SN (SN = Smoke Number, unité qui mesure une quantité de fumées). On obtient également une augmentation de la marge par rapport à la norme connue OACI (Organisation de l'Aviation Civile Internationale) de 3% des gaz NOx en dehors des zones adjacentes 60 aux bougies 36.

Comme représenté sur la figure 2 et en comparant avec la figure 4, le décalage vers l'amont des trous primaires 100 qui se trouvent en dehors des zones adjacentes 60 par rapport aux trous primaires 100 qui se trouvent dans les zones adjacentes 60 s'accompagne d'un décalage identique des trous de dilution 200, c'est-à-dire que la distance entre un trou primaire 100 et le trou de dilution 200 situé directement en aval de ce trou primaire 100 selon la direction de l'axe A est sensiblement constante sur toute la circonférence de la chambre de combustion 10. Pour chaque zone adjacente 60, les trous de dilution 200 situés à cheval sur chacune des deux bordures de cette zone adjacente sont décalés de la moitié de la distance de décalage des autres trous de dilution 200.

Alternativement, les trous de dilution 200 peuvent ne pas être décalés entre les zones adjacentes 60 et les parties de la paroi latérale externe 12 en dehors des zones adjacentes 60, c'est-à-dire que tous les trous de dilution 200 sont situés sur une même circonférence autour de l'axe A.

La paroi latérale interne 14 de la chambre de combustion 10 peut comporter des trous primaires 110 et des trous de dilution 210.

Avantageusement, ces trous primaires 110 sont sensiblement à la même distance par rapport au fond de chambre 13 que les trous primaires 100 de la paroi latérale externe 12 situés dans chacune des zones adjacentes 60 à une des bougies 36.

Ainsi, les trous primaires 110 de la paroi latérale interne 14 sont situés sensiblement en regard des trous primaires 100 de la paroi latérale externe 12, selon des directions perpendiculaires à ces parois latérales.

Cette disposition permet de définir plus précisément, d'un point de vue aérodynamique, le volume de la zone primaire.

Les trous de dilution 210 peuvent être en outre situés sensiblement en regard des trous de dilution 200 de la paroi latérale externe 12 situés dans chacune des zones adjacentes 60 à une des bougies 36.

Additionnellement, le rapport R₁ du débit d'air ρ_{P1} passant par les trous primaires 100 qui se trouvent dans les zones adjacentes 60 au débit d'air ρ_{D1} passant par les trous de dilution 200 qui se trouvent dans les zones adjacentes 60 est inférieur au rapport R₂ du débit d'air ρ_{P2} passant par les trous primaires 100 qui se trouvent en dehors des zones adjacentes 60 au débit d'air ρ_{D2} passant par les trous de dilution 200 qui se trouvent en dehors des zones adjacentes 60. Cette situation est illustrée dans l'exemple demonstratif en figure 3.

En dehors des zones adjacentes 60, le débit d'air ρ_{P2} passant par les trous primaires 100 est augmenté par rapport au débit d'air ρ_{D2} passant par les trous de dilution 200. Ceci permet de satisfaire aux normes de pollution. Cependant, dans les zones adjacentes 60 qui entourent les bougies 36, le rapport R₁ du débit d'air ρ_{D1} passant par les trous primaires 100 au débit d'air ρ_{D1} passant par les trous de dilution 200 est inchangé, ce qui permet de conserver le plafond de rallumage élevé souhaité.

Comme illustré dans l'exemple demonstratif en figure 3, le rapport R₂ du débit d'air ρ_{P2} passant par les trous primaires 100 qui se trouvent en dehors des zones adjacentes 60 au débit d'air ρ_{D2} passant par les trous de dilution 200 qui se trouvent en dehors des zones adjacentes 60 est augmenté en augmentant le débit d'air ρ_{P2} et en diminuant le débit d'air ρ_{D2}. Ces modifications de débit sont obtenues par une modification de la section d'au moins une partie des trous primaires 100 et de la section d'au moins une partie des trous de dilution 200.

Ainsi, les essais réalisés par les inventeurs montrent que lorsque le débit d'air ρ_{P2} passant par les trous primaires 100 qui se trouvent en dehors des zones adjacentes 60 est augmenté de 2% du débit de la chambre au détriment du débit d'air ρ_{D2} passant par les trous de dilution 200 qui se trouvent en dehors des zones adjacentes 60, sans modification des débits d'air passant par les trous primaires 100 et les trous de dilution 200 qui se trouvent dans les zones adjacentes 60, on obtient une diminution du niveau de fumées de 2 SN.

Ces modifications de débit peuvent également être obtenues soit uniquement en augmentant le débit d'air ρ_{P2} passant par les trous primaires 100 qui se trouvent en dehors des zones adjacentes 60, soit uniquement en diminuant le débit d'air ρ_{D2} passant par les trous de dilution 200 qui se trouvent en dehors des zones adjacentes 60.

Dans l'exemple demonstratif sur la figure 3, la section de chacun des trous primaires 100 qui se trouvent en dehors des zones adjacentes 60 est augmentée par rapport à la section de chacun des trous primaires 100 qui se trouvent dans les zones adjacentes 60. En parallèle, pour les trous de dilution 200 qui se trouvent en dehors des zones adjacentes 60, la section d'un trou de dilution 201 tous les quatre trous de dilution 200, initialement supérieure à la section d'un des trois autres trous de dilution 200, est diminuée jusqu'à la section d'un des trois autres trous de dilution 200, tandis que la section des quatre trous de dilution 200 dans les zones adjacentes 60 reste inchangée : trois de ces trous de dilution 200 ont chacun une section égale à la section d'un des trois autres trous de dilution 200 qui se trouvent en dehors des zones adjacentes 60, le trou de dilution 200 restant ayant une section supérieure.

D'une manière générale, la moyenne des sections des trous primaires 100 qui se trouvent dans les zones adjacentes 60 est inférieure à la moyenne des sections des trous primaires 100 qui se trouve en dehors des zones adjacentes 60. Par exemple, la section de chacun des trous primaires 100 qui se trouvent dans les zones adjacentes 60 est inférieure à la section de chacun des trous primaires 100 qui se trouve en dehors des zones adjacentes 60. Par exemple, la section de chacun des trous primaires 100 qui se trouvent dans les zones adjacentes 60 est sensiblement égale à la moitié de la section de chacun des trous primaires 100 qui se trouve en dehors des zones adjacentes 60.

En outre ou en supplément, d'une manière générale, selon l'invention, la moyenne des sections des trous de dilution 200 qui se trouvent dans les zones adjacentes 60 est supérieure à la moyenne des sections des trous de dilution 200 qui se trouvent en dehors des zones adjacentes 60. Par exemple, certains des trous de dilution 200 qui se trouvent dans les zones adjacentes 60 ont une première section, les autres trous de dilution 200 qui se trouvent dans les zones adjacentes 60 ayant une seconde section inférieure à la première section, tandis que tous les trous de dilution 200 qui se trouvent en dehors des zones adjacentes 60 ont une section égale à cette seconde section. Par exemple, certains des trous de dilution 200 qui se trouvent dans les zones adjacentes 60 ont une première section, les autres trous de dilution 200 qui se trouvent dans les zones adjacentes 60 ayant une seconde section égale à la moitié de la première section, tandis que tous les trous de dilution 200 qui se trouvent en dehors des zones adjacentes 60 ont une section égale à cette seconde section.

Les trous dans l'exemple demonstratif sur la figure 3 étant circulaires, modifier leur section revient à modifier leur diamètre.

Alternativement, on peut maintenir, en dehors des zones adjacentes 60, le rapport R₂ du débit d'air ρ_{P2} passant par les trous primaires 100 au débit d'air ρ_{D2} passant par les trous de dilution 200, et diminuer, dans les zones adjacentes 60, le rapport R₁ du débit d'air ρ_{P1} passant par les trous primaires 100 au débit d'air ρ_{D1} passant par les trous de dilution 200. Cette diminution du rapport R₁ peut s'effectuer en modifiant les sections de ces trous.

Selon l'invention, les trous primaires 100 qui se trouvent en dehors des zones adjacentes 60 sont situés plus en amont que les trous primaires 100 qui se trouvent dans les zones adjacentes 60, et en plus il est possible de faire en sorte que le rapport R₁ du débit d'air ρ_{P1} passant par les trous primaires 100 qui se trouvent dans les zones adjacentes 60 au débit d'air ρ_{D1} passant par les trous de dilution 200 qui se trouvent dans les zones adjacentes 60 soit inférieur au rapport R₂ du débit d'air ρ_{P2} passant par les trous primaires 100 qui se trouvent en dehors des zones adjacentes 60 au débit d'air ρ_{D2} passant par les trous de dilution 200 qui se trouvent en dehors des zones adjacentes 60.

Ainsi, les essais réalisés par les inventeurs montrent lorsque le volume de la zone primaire en dehors des zones adjacentes 60 passe de 2,77 litres à 2,2 litres, et lorsque le débit d'air ρ_{P2} passant par les trous primaires 100 qui se trouvent en dehors des zones adjacentes 60 est augmenté de 2% du débit de la chambre au détriment du débit d'air ρ_{D2} passant par les trous de dilution 200 qui se trouvent en dehors des zones adjacentes 60, sans modification des débits d'air passant par les trous primaires 100 et les trous de dilution 200 qui se trouvent dans les zones adjacentes 60, on obtient une diminution du niveau de fumées de 4 SN et une augmentation de la marge par rapport à la norme OACI de 4% des gaz NOx en dehors des zones adjacentes 60.

La paroi latérale interne 14 de la chambre de combustion 10 peut comporter des trous primaires 110 et des trous de dilution 210.

Avantageusement, ces trous primaires (110) sont tels que le débit d'air passant par ces trous primaires (110) est sensiblement égal au débit d'air passant par les trous primaires (100) de la paroi latérale externe (12).

Ainsi, la combustion au sein de la chambre est plus symétrique, ce qui contribue à augmenter la durée de vie de la turbine.

Les trous primaires 100 et les trous de dilution 200 sont disposés de telle sorte que les normes de pollution soient satisfaites et que le plafond de rallumage élevé souhaité soit atteint/conservé.

## Revendications

1. Chambre de combustion (10) de turbomachine aéronautique, annulaire d'axe longitudinal (A), délimitée par une paroi latérale externe (12), une paroi latérale interne (14), et un fond de chambre (13) annulaire reliant une extrémité de ladite paroi latérale externe et une extrémité de ladite paroi latérale interne, ladite paroi latérale externe (12) comportant, répartis le long de sa circonférence, des bougies (36), des trous primaires (100), et des trous de dilution (200) situés en aval desdits trous primaires (100) selon la direction dudit axe longitudinal (A), ladite chambre de combustion étant **caractérisée en ce que** les trous primaires (100) situés dans chacune des zones adjacentes (60) à une desdites bougies (36) sont situés plus en aval que les trous primaires (100) situés en dehors desdites zones.

2. Chambre de combustion selon la revendication 1 **caractérisée en ce que** la distance entre le premier plan (P1) qui contient lesdits trous primaires (100) qui se trouvent dans lesdites zones adjacentes (60) et le second plan (P2) qui contient lesdits trous primaires (100) qui se trouvent en dehors desdites zones adjacentes (60) est supérieure à la plus grande dimension d'un desdits trous primaires (100).

3. Chambre de combustion selon la revendication 1 ou 2 **caractérisée en ce que** ladite paroi latérale interne (14) comporte des trous primaires (110) qui sont situés sensiblement à la même distance par rapport au fond de chambre 13 que les trous primaires (100)de ladite paroi latérale externe 12 situés dans chacune des zones adjacentes (60) à une desdites bougies (36).

4. Chambre de combustion (10) selon l'une quelconque des revendications 1 à 3 **caractérisée en ce que** le rapport (R₁) du débit d'air passant par les trous primaires (100) au débit d'air passant par les trous de dilution (200) dans une desdites zones adjacentes (60) à une desdites bougies (36) est inférieur au rapport (R₂) du débit d'air passant par les trous primaires (100) au débit d'air passant par les trous de dilution (200) en dehors desdites zones.

5. Chambre de combustion selon la revendication 4 **caractérisée en ce que** la moyenne des sections des trous primaires (100) qui se trouvent dans lesdites zones adjacentes (60) est inférieure à la moyenne des sections des trous primaires (100) qui se trouve en dehors desdites zones.

6. Chambre de combustion selon la revendication 5 **caractérisée en ce que** la section de chacun des trous primaires (100) qui se trouvent dans lesdites zones adjacentes (60) est sensiblement égale à la moitié de la section de chacun des trous primaires (100) qui se trouve en dehors desdites zones.

7. Chambre de combustion selon l'une quelconque des revendications 4 à 6 **caractérisée en ce que** la moyenne des sections des trous de dilution (200) qui se trouvent dans lesdites zones adjacentes (60) est supérieure à la moyenne des sections des trous de dilution (200) qui se trouvent en dehors desdites zones adjacentes (60).

8. Chambre de combustion selon la revendication 7 **caractérisée en ce que** certains des trous de dilution (200) qui se trouvent dans lesdites zones adjacentes (60) ont une première section, les autres trous de dilution (200) qui se trouvent dans lesdites zones adjacentes (60) ayant une seconde section égale à la moitié de ladite première section, tandis que tous les trous de dilution (200) qui se trouvent en dehors des zones adjacentes (60) ont une section égale à cette seconde section.

9. Chambre de combustion selon l'une quelconque des revendications 4 à 8 **caractérisée en ce que** ladite paroi latérale interne (14) comporte des trous primaires (110) qui sont tels que le débit d'air passant par lesdits trous primaires (110) est sensiblement égal au débit d'air passant par les trous primaires (100) de ladite paroi latérale externe (12).

## Patentansprüche

1. Brennkammer (10) eines Luftfahrt-Turbinenmotors, die ringförmig mit einer Längsachse (A) und von einer äußeren Seitenwand (12), einer inneren Seitenwand (14) und einem ringförmigen Kammerboden (13) begrenzt ist, der ein Ende der äußeren Seitenwand und ein Ende der inneren Seitenwand verbindet, wobei die äußere Seitenwand (12) entlang ihres Umfangs verteilt Zündkerzen (36), Primärlöcher (100) und Verdünnungslöcher (200) umfasst, die sich stromabwärts zu den Primärlöchern (100) in Richtung der Längsachse (A) erstrecken, wobei die Brennkammer **dadurch gekennzeichnet ist, dass** die Primärlöcher (100), die sich in jeder der Zonen (60), die an eine der Zündkerzen (36) angrenzen, befinden, weiter stromabwärts angeordnet sind als die Primärlöcher (100), die sich außerhalb der Zonen befinden.

2. Brennkammer nach Anspruch 1, **dadurch gekennzeichnet, dass** der Abstand zwischen der ersten Ebene (P1), die die Primärlöcher (100) enthält, die sich in den angrenzenden Zonen (60) befinden, und der zweiten Ebene (P2), die die Primärlöcher (100) enthält, die sich außerhalb der angrenzenden Zonen (60) befinden, größer als die größte Abmessung eines der Primärlöcher (100) ist.

3. Brennkammer nach Anspruch 1 oder 2, **dadurch gekennzeichnet, dass** die innere Seitenwand (14) Primärlöcher (110) umfasst, die sich im Wesentlichen in demselben Abstand zum Kammerboden 13 befinden, wie die Primärlöcher (100) der äußeren Seitenwand (12), die sich in jeder der an eine der Zündkerzen (36) angrenzenden Zonen (60) befinden.

4. Brennkammer (10) nach einem der Ansprüche 1 bis 3, **dadurch gekennzeichnet, dass** das Verhältnis (R₁) der durch die Primärlöcher (100) strömenden Luftmenge zu der durch die Verdünnungslöcher (200) strömenden Luftmenge, die in einer der an eine der Zündkerzen (36) angrenzenden Zonen (60) sind, kleiner als das Verhältnis (R₂) der durch die Primärlöcher (100) strömenden Luftmenge zu der durch die Verdünnungslöcher (200) strömenden Luftmenge ist, die außerhalb der Zonen sind.

5. Brennkammer nach Anspruch 4, **dadurch gekennzeichnet**, das der Durchschnitt der Querschnitte der Primärlöcher (100), die sich in den angrenzenden Zonen (60) befinden, kleiner als der Durchschnitt der Querschnitte der Primärlöcher (100) ist, die sich außerhalb der Zonen befinden.

6. Brennkammer nach Anspruch 5, **dadurch gekennzeichnet, dass** der Querschnitt jedes der Primärlöcher (100), die sich in den angrenzenden Zonen (60) befinden, im Wesentlichen gleich der Hälfte des Querschnitts jedes der Primärlöcher (100) ist, die sich außerhalb der Zonen befinden.

7. Brennkammer nach einem der Ansprüche 4 bis 6, **dadurch gekennzeichnet, dass** der Durchschnitt der Querschnitte der Verdünnungslöcher (200), die sich in den angrenzenden Zonen (60) befinden, größer als der Durchschnitt der Querschnitte der Verdünnungslöcher (200) ist, die sich außerhalb der angrenzenden Zonen (60) befinden.

8. Brennkammer nach Anspruch 7, **dadurch gekennzeichnet, dass** gewisse der Verdünnungslöcher (200), die sich in den angrenzenden Zonen (60) befinden, einen ersten Querschnitt haben, wobei die anderen Verdünnungslöcher (200), die sich in den angrenzenden Zonen (60) befinden, einen zweiten Querschnitt gleich der Hälfte des ersten Querschnitts haben, während alle Verdünnungslöcher (200), die sich außerhalb der angrenzenden Zonen (60) befinden, einen Querschnitt gleich diesem zweiten Querschnitt haben.

9. Brennkammer nach einem der Ansprüche 4 bis 8, **dadurch gekennzeichnet, dass** die innere Seitenwand (14) Primärlöcher (110) umfasst, die derart sind, dass die durch die Primärlöcher (110) strömende Luftmenge im Wesentlichen gleich der Luftmenge ist, die durch die Primärlöcher (100) der äußeren Seitenwand (12) strömt.

## Claims

1. A combustion chamber (10) for an aviation turbine engine, the combustion chamber being annular about a longitudinal axis A, being defined by an outer side wall (12), an inner side wall (14), and an annular chamber end wall (13) connecting one end of said outer side wall to one end of said inner side wall, said outer side wall (12) including, distributed along its circumference, spark plugs (36), primary holes (100), and dilution holes (200) situated downstream from said primary holes (100) in the direction of said longitudinal axis A, said combustion chamber being **characterized in that** the primary holes (100) situated in each of the adjacent zones (60) adjacent to one of said spark plugs (36) are situated further downstream than the primary holes (100) situated outside said zones.

2. A combustion chamber according to claim 1, **characterized in that** the distance between the first plane (P1) containing said primary holes (100) that lie in said adjacent zones (60) and the second plane (P2) that contains said primary holes (100) that lie outside said adjacent zones (60) is greater than the greatest dimension of one of said primary holes (100).

3. A combustion chamber according to claim 1 or claim 2, **characterized in that** said inner side wall (14) includes primary holes (110) that are situated substantially at the same distance from the chamber end wall (13) as the primary holes (100) of said outer side wall (12) that are situated in each of the adjacent zones (60) adjacent to one of said spark plugs (36).

4. A combustion chamber (10) according to any one of claims 1 to 3, **characterized in that** the ratio (R₁) of the flow rate of air passing via the primary holes (100) to the flow rate of air passing via the dilution holes (200) in a said adjacent zone (60) adjacent to one of said spark plugs (36) is less than the ratio (R₂) of the flow rate of air passing via the primary holes (100) to the flow rate of air passing via the dilution holes (200) outside said zones.

5. A combustion chamber according to claim 4, **characterized in that** the mean of the sections of the primary holes (100) that lie within said adjacent zones (60) is less than the mean of the sections of the primary holes (100) that lie outside said zones.

6. A combustion chamber according to claim 5, **characterized in that** the section of each of the primary holes (100) that lies within said adjacent zones (60) is substantially equal to half the section of each of the primary holes (100) that lie outside said zones.

7. A combustion chamber according to any one of claims 4 to 6, **characterized in that** the mean of the sections of the dilution holes (200) that lie within said adjacent zones (60) is greater than the mean of the sections of the dilution holes (200) that lie outside said adjacent zones (60).

8. A combustion chamber according to claim 7, **characterized in that** some of the dilution holes (200) that lie within said adjacent zones (60) have a first section, the other dilution holes (200) that lie within said adjacent zones (60) having a second section equal to half said first section, while all of the dilution holes (200) that lie outside the adjacent zones (60) are of a section equal to said second section.

9. A combustion chamber according to any one of claims 4 to 8, **characterized in that** said inner side wall (14) includes primary holes (110) that are such that the flow rate of air passing via said primary holes (110) is substantially equal to the flow rate of air passing via the primary holes (100) of said outer side wall (12).
